(19) Europäisches Patentamt / European Patent Office / Office européen des brevets

(11) **EP 2 898 644 B1**

(12) **FASCICULE DE BREVET EUROPEEN**

(45) Date de publication et mention de la délivrance du brevet:
**02.11.2016 Bulletin 2016/44**

(21) Numéro de dépôt: **13782729.1**

(22) Date de dépôt: **20.09.2013**

(51) Int Cl.:
**H04L 27/26** (2006.01)

(86) Numéro de dépôt international:
**PCT/FR2013/052197**

(87) Numéro de publication internationale:
**WO 2014/044989 (27.03.2014 Gazette 2014/13)**

(54) **SYNCHRONISATION DE TRAME DANS UN RÉCEPTEUR EN UTILISANT UN PRÉAMBULE AYANT UNE STRUCTURE SPÉCIFIQUE**

RAHMENSYNCHRONIZATION IN EINEM EMPFÄNGER MIT EINEM PRÄAMBLE MIT EINER SPEZIFISCHEN STRUKTUR

FRAME SYNCHRONIZATION IN A RECEIVER USING A PREAMBLE HAVING A SPECIFIC STRUCTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.09.2012 FR 1258850**

(43) Date de publication de la demande:
**29.07.2015 Bulletin 2015/31**

(73) Titulaire: **Orange
75015 Paris (FR)**

(72) Inventeurs:
• **TRUONG, Tuan Anh
F-35510 Cesson Sevigne (FR)**
• **JAHAN, Bruno
F-35190 Tinteniac (FR)**
• **LIN, Hao
F-35700 Rennes (FR)**

(56) Documents cités:
**US-A1- 2003 072 256**

• **CHAO CHEN ET AL: "Three Timing Synchronization Methods Based on Two Same Preambles for OFDM Systems", PROCEDIA ENGINEERING, vol. 29, 1 janvier 2011 (2011-01-01), pages 1656-1661, XP028457393, ISSN: 1877-7058, DOI: 10.1016/J.PROENG.2012.01.190 [extrait le 2012-02-15]**

## Description

### Domaine de l'invention

Le domaine de l'invention est celui de la transmission de signaux numériques transmis selon un certain format.

L'invention trouve des applications dans le domaine des télécommunications avec un canal de transmission de type fibre optique, mais pas exclusivement. Le canal peut tout aussi bien être de type CPL ou de type aérien parfois dit radio.

Le canal de type fibre optique est dispersif.

Le canal CPL, acronymes de Courant Porteur en Ligne (ou selon la terminologie anglosaxonne Power Line Telecommunication, PLT), induit des effets similaires à ceux rencontrés dans un canal aérien. En particulier, le canal CPL, comme le canal aérien, peut conduire à des trajets multiples lors de la transmission.

Une application particulière concerne la transmission pour des réseaux d'accès avec une modulation OFDM et une modulation directe d'intensité du laser associée à une détection directe par photodiode (selon la terminologie anglo-saxonne, Intensity Modulation and Direct Detection, IMDD).

Dans le cas par exemple d'un signal multi porteuse de type OFDM ("Orthogonal Frequency Division Multiplexing", multiplexage par répartition orthogonale de fréquence), les données sont formatées sous forme de symboles OFDM insérés dans des trames. Chaque symbole OFDM est généralement précédé par un intervalle de garde lorsque le canal de transmission est dispersif. Une trame débute généralement par un ou plusieurs préambules.

La modulation OFDM est bien connue et utilisée dans de nombreux systèmes de communication numérique (ADSL, WIFI, etc.) et dans des systèmes de diffusion numérique (DAB, DVB-T, DRM, etc.). Pour cette modulation, il existe différents niveaux de synchronisation au niveau d'un récepteur :

- synchronisation symbole, consistant à délimiter dans le temps les symboles numériques transmis en délivrant des tops symbole;
- synchronisation d'horloge (ou récupération de rythme), consistant à régler la fréquence d'échantillonnage du récepteur afin d'échantillonner le signal reçu aux meilleurs instants;
- synchronisation trame, consistant à repérer les structures de données utilisées par l'émetteur parmi l'ensemble des symboles reçus, afin de dé-tramer les données et permettre leur décodage;
- synchronisation fréquentielle (ou récupération de porteuse), consistant à corriger la haute fréquence utilisé par le récepteur pour ramener le signal reçu en bande de base en éliminant les écarts de fréquence avec la porteuse utilisée par l'émetteur.

Selon cette distinction, l'invention peut se rattacher aux méthodes de synchronisation trame, aux méthodes de synchronisation temporelle et aux méthodes de synchronisation fréquentielle.

### Art antérieur

La synchronisation trame est souvent réalisée en exploitant des préambules transmis au début des trames. Le récepteur calcule classiquement l'auto corrélation du signal reçu et détecte le début de la trame si le résultat de l'auto corrélation franchie un seuil de décision déterminé.

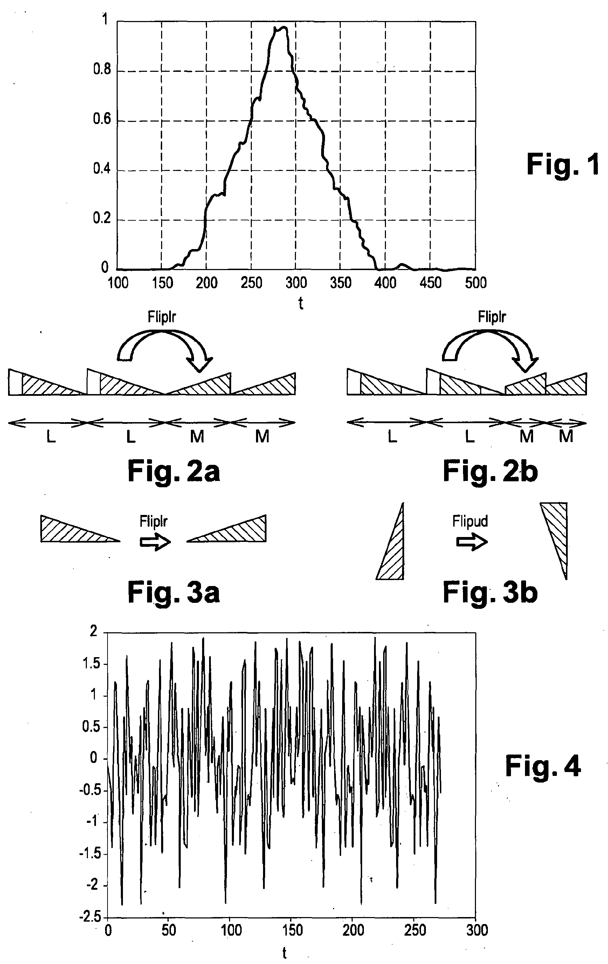

Schmidl et Cox [1] ont proposé un préambule avec une structure répétitive *[A A]*. *A* est une séquence temporelle qui peut être générée au moyen d'une IFFT (Inverse Fast Fourier Transform, transformée de Fourier rapide inverse) de taille N/2 d'une séquence PN (séquence +1, -1 pseudo aléatoire) avec N la longueur du préambule. La séquence PN est choisie pour que le PAPR (Peak to Average Power Ratio, le rapport entre la puissance crête et la moyenne) du préambule soit faible, ce qui diminue l'impact de l'écrêtage du signal au niveau du convertisseur numérique analogique DAC (Digital to Analog Converter). En réception la métrique de synchronisation illustrée par la figure 1 est calculée en prenant l'auto corrélation du signal reçu. La méthode de Schmidl-Cox est simple mais la variance de l'estimateur temporel est importante ce qui dégrade les performances de la synchronisation.

Une autre préambule avec une structure répétitive a été divulgé par US 2003/0072256.

### Exposé de l'invention

L'invention propose un procédé de synchronisation d'un récepteur recevant un signal comprenant des échantillons successifs mis en trame dont le début est délimité par un préambule.

Le procédé de synchronisation comprend :

- un calcul à des instants $d$ successifs correspondants respectivement à des échantillons reçus, d'une métrique de synchronisation grossière dont l'expression exploite la structure répétitive du préambule constitué d'au moins deux parties, une partie comprenant une première séquence répétée de L échantillons et une autre partie comprenant une deuxième séquence répétée de M échantillons, la deuxième séquence correspondant à une version symétrique de la première séquence limitée au nombre M d'échantillons inférieur au nombre L d'échantillons, cette métrique donnant une mesure de la somme des corrélations entre deux paires successives de séquences d'échantillons reçus sur une fenêtre glissante de taille égale à celle du préambule,

- une détection du dépassement d'un seuil déterminé par la métrique grossière, dépassement auquel correspond un instant *ds* de synchronisation dit grossière.

L'invention a en outre pour objet un récepteur d'un signal comprenant des échantillons successifs mis en trame dont le début est délimité par un préambule. Le récepteur comprend :

- un calculateur pour calculer à des instants d successifs correspondants respectivement à des échantillons reçus, une métrique de synchronisation grossière dont l'expression exploite la structure répétitive du préambule constitué d'au moins deux parties, une partie comprenant une première séquence répétée de L échantillons et une autre partie comprenant une deuxième séquence répétée de M échantillons, la deuxième séquence correspondant à une version symétrique de la première séquence limitée au nombre M d'échantillons inférieur au nombre L d'échantillons, cette métrique donnant une mesure de la somme des corrélations entre deux paires successives de séquences d'échantillons reçus sur une fenêtre glissante de taille égale à celle du préambule,
- un moyen de détection du dépassement d'un seuil déterminé par la métrique grossière, dépassement auquel correspond un instant *ds* de synchronisation dit grossière du récepteur.

L'invention a en outre pour objet un procédé de transmission d'un signal comprenant des échantillons successifs mis en trame dont le début est délimité par un préambule. Le procédé de transmission détermine le préambule tel qu'il soit constitué d'au moins deux parties, une partie comprenant la répétition d'une première séquence $T_L$ de L échantillons et une autre partie comprenant une deuxième séquence $U_M$ répétée de M échantillons telle que cette deuxième séquence $U_M$ correspond à une version symétrique de la première séquence $T_L$ limitée au nombre M d'échantillons, nombre qui est inférieur au nombre L d'échantillons de la première séquence $T_L$

L'invention a en outre pour objet un signal transmis entre un émetteur et un récepteur comprenant des échantillons successifs mis en trame dont le début est délimité par un préambule. Le signal est tel que :

- le préambule est constitué d'au moins deux parties, une partie comprenant une première séquence $T_L$ répétée de L échantillons et une autre partie comprenant une deuxième séquence $U_M$ répétée de M échantillons telle que cette deuxième séquence $U_M$ correspond à une version symétrique de la première séquence $T_L$ limitée au nombre M d'échantillons, nombre qui est inférieur au nombre L d'échantillons de la première séquence $T_L$.

L'invention a en outre pour objet un émetteur d'un signal comprenant des échantillons successifs mis en trame dont le début est délimité par un préambule. L'émetteur comprend des moyens de détermination du préambule tel que :

- le préambule soit constitué d'au moins deux parties, une partie comprenant la répétition d'une première séquence $T_L$ de L échantillons et une autre partie comprenant une deuxième séquence $U_M$ répétée de M échantillons telle que cette deuxième séquence $U_M$ correspond à une version symétrique de la première séquence $T_L$ limitée au nombre M d'échantillons, nombre qui est inférieur au nombre L d'échantillons de la première séquence $T_L$.

L'invention repose sur la transmission d'échantillons mis en trame délimitée par un préambule qui possède simultanément une structure répétitive et symétrique. En exploitant séparément ces particularités, le procédé de synchronisation gagne en simplicité et en efficacité. La deuxième séquence du préambule est égale à la version symétrique gauche-droite, respectivement haut-bas, de la première séquence limitée à un nombre M d'échantillons dans le cas d'une séquence écrite sous la forme d'un vecteur ligne, respectivement dans le cas d'une séquence écrite sous la forme d'un vecteur colonne.

Ainsi, l'exploitation de la répétition d'une première séquence et de la répétition d'une deuxième séquence permet de définir une métrique de synchronisation grossière simple. Contrairement à la technique de l'art antérieur, la métrique de synchronisation grossière évolue régulièrement avec le temps, elle ne présente pas de plateau c'est-à-dire d'instants successifs conduisant à une même valeur de métrique. En outre, la métrique présente une forme moins étalée que les métriques connues, ce qui permet de gagner en précision.

En outre, la métrique de synchronisation grossière ainsi définie ne présente pas de pic secondaire compte tenu de la contrainte de longueurs différentes entre les deux séquences. L'existence d'un pic secondaire est désavantageuse puisqu'un tel pic nécessite de déterminer un seuil de décision qui lui soit supérieur sinon le risque est de détecter ce pic secondaire. Si l'amplitude du pic secondaire est proche de celle du pic principal, la synchronisation grossière est moins fiable.

Le préambule est particulièrement avantageux car la métrique de synchronisation qui exploite sa structure répétitive présente un pic principal dont l'amplitude est importante même dans le cas d'un canal optique de transmission qui introduit de la dispersion chromatique. Cette amplitude est en effet proche de un quand la métrique est normalisée. Ce préambule peut être utilisé aussi bien pour une transmission optique cohérente ou non cohérente qu'une transmission radio.

Dans un cas particulier l'émetteur comprend un modulateur OFDM et le préambule est alors constitué par exemple d'un ou plusieurs symboles OFDM. Les sous porteuses du ou des symboles OFDM peuvent être mappées avec des symboles issus d'une modulation à plusieurs états telles qu'une BPSK, QPSK, xQAM avec x une puissance de deux, etc.

Selon un mode de réalisation particulier, le procédé de synchronisation comprend en outre :

- un calcul à des instants $d$ successifs sur une zone de recherche de taille $\Delta$ débutant à l'instant $ds$ de synchronisation grossière, d'une métrique de synchronisation fine dont l'expression exploite la structure symétrique du préambule pour donner une mesure d'une corrélation entre séquences d'échantillons reçus sur une fenêtre glissante de taille égale à celle du préambule, le maximum de la métrique ou le dépassement d'un seuil déterminé détermine un instant $df$ dit de synchronisation fine.

Selon un mode de réalisation particulier, le récepteur comprend en outre :

- un calculateur pour calculer à des instants $d$ successifs sur une zone de recherche de taille $\Delta$ commençant à l'instant $ds$ de synchronisation grossière, une métrique de synchronisation fine dont l'expression exploite la structure symétrique du préambule pour donner une mesure d'une corrélation entre séquences d'échantillons reçus sur une fenêtre glissante de taille égale à celle du préambule, le maximum de la métrique ou le dépassement d'un seuil déterminé détermine un instant $df$ dit de synchronisation fine du récepteur.

L'exploitation de la symétrie de la structure du préambule permet de définir une métrique de synchronisation dite fine qui présente un maximum lorsque la fenêtre glissante de taille égale à celle du préambule est calée sur le début du préambule. En outre, l'expression de cette métrique basée sur la symétrie de la structure du préambule est telle que le maximum est pincé.

Le resserrement du maximum obtenu avec la deuxième métrique par rapport à celui obtenu avec la première métrique permet de gagner en précision sur la détermination de l'instant de synchronisation. Cette précision peut se constater par la faible variance de l'écart entre la position détectée et la vraie position de début de la trame reçue.

Grâce à la structure particulière du préambule qui possède simultanément une structure répétitive et une structure symétrique, la synchronisation fine et la synchronisation grossière peuvent être effectuées avec le même préambule.

Le calcul de la métrique fine est limité à une fenêtre temporelle de recherche de taille $\Delta$ qui commence à l'instant de synchronisation grossière obtenu par le calcul de la première métrique ce qui permet de limiter le nombre d'opérations.

Selon un mode de réalisation particulier, le procédé de synchronisation comprend en outre :

- un calcul à des instants $d$ successifs sur une fenêtre de recherche de taille $\Delta$ commençant à l'instant $ds$ de synchronisation grossière, du produit de la métrique de synchronisation grossière avec une métrique de synchronisation fine dont l'expression exploite la structure symétrique du préambule pour donner une mesure d'une corrélation entre séquences d'échantillons reçus sur une fenêtre glissante de taille égale à celle du préambule, le maximum du produit des métriques ou le dépassement d'un seuil détermine un instant $df$ dit de synchronisation fine.

L'exploitation de la symétrie de la structure du préambule permet de définir une métrique de synchronisation dite fine qui présente un maximum lorsque la fenêtre glissante de taille égale à celle du préambule est calée sur le début du préambule. En outre, l'expression de cette métrique basée sur la symétrie de la structure du préambule est telle que le maximum est pincé.

Le calcul à des instants d successifs du produit de la métrique grossière par la métrique fine est limité à une fenêtre temporelle de recherche de taille $\Delta$ qui commence à l'instant de synchronisation grossière obtenu par le calcul de la première métrique.

Le produit des deux métriques permet de resserrer la base du maximum de la mesure de corrélation obtenue par la première métrique et donc de gagner en précision sur la détermination de l'instant de synchronisation. Cette précision peut se constater par la faible variance de l'écart entre la position détectée et la vraie position de début de la trame reçue.

Grâce à la structure particulière du préambule qui possède simultanément une structure répétitive et une structure symétrique, la synchronisation fine et la synchronisation grossière peuvent être effectuées avec le même préambule.

Selon un mode de réalisation particulier avec un préambule [$T_L$, $T_L$, $U_M$, $U_M$], L > M, la métrique de synchronisation grossière a pour expression :

$$P_{pro1}(d) = \sum_{i=0}^{L-1} R(d+i).R(d+i+L)^* + \sum_{i=0}^{M-1} R(d+i+2L).R(d+i+2L+M)^*$$

avec $R(k)$ le signal reçu sous sa forme numérique, $(.)^*$ est un opérateur conjugué.

Selon un mode de réalisation particulier avec un préambule [$U_M$, $U_M$, $T_L$, $T_L$], M < L, la métrique de synchronisation grossière a pour expression :

$$P_{pro1}(d) = \sum_{i=0}^{M-1} R(d+i).R(d+i+M)^* + \sum_{i=0}^{L-1} R(d+i+2M).R(d+i+2M+L)^*$$

Selon un mode de réalisation particulier, la métrique grossière est normalisée en puissance.

La normalisation en puissance de la métrique permet avantageusement de borner les calculs numériques et de borner le seuil de décision par les bornes zéro et un.

Selon un mode de réalisation particulier avec un préambule [$T_L$, $T_L$, $U_M$, $U_M$], L > M, la métrique de synchronisation fine a pour expression :

$$P_{pro2}(d) = \sum_{i=0}^{M-1}[R(d+i+L-M).R(d-i+N-1)^* + R(d+i+2L-M).R(d-i+2L+M-1)^*]$$

ou

$$P_{pro2}(d) = \sum_{i=0}^{M-1}[R(d+i+L-M).R(d-i+2L+M-1)^* + R(d+i+2L-M).R(d-i+N-1)^*]$$

Selon un mode de réalisation particulier avec un préambule [$U_M$, $U_M$, $T_L$, $T_L$], M < L, la métrique de synchronisation fine a pour expression :

$$P_{pro2}(d) = \sum_{i=0}^{M-1}[R(d+i).R(d-i+N-1)^* + R(d+i+M).R(d-i+2M+L-1)^*]$$

ou

$$P_{pro2}(d) = \sum_{i=0}^{M-1}[R(d+i).R(d-i+2M+L-1)^* + R(d+i+M).R(d-i+N-1)^*]$$

Dans le cas d'un signal $R(k)$ réel son conjugué est réel : $(.)^* = (.)$. Par suite l'expression de chacune des métriques peut s'écrire sans faire apparaître de conjugué.

Selon un mode de réalisation particulier, la métrique fine est normalisée en puissance.

La normalisation en puissance de la métrique permet avantageusement de borner les calculs numériques en plafonnant les évolutions de puissance à un maximum égal à un et de pouvoir fixer un seuil de décision sur une plage connue de zéro à un.

Selon un mode de réalisation particulier, le procédé de transmission est tel que la première séquence $T_L$ est obtenue par une transformée de Fourier inverse de taille L d'une séquence aléatoire S dont les éléments appartiennent à une constellation QPSK, la séquence aléatoire S est la suivante : [-1+ j; -1+ j; 1+j; -1-j; -1- j; -1+j; 1+j; -1+ j; -1+ j; 1- j;

-1-j; -1+ j; 1+ j; -1-j; -1-j; -1-j; 1+j; -1+ j; 1- j ; -1- j; 1+ j; 1- j; -1+ j; -1- j; -1- j; 1+ j; -1-j; 0; 0; 0; 0], le nombre M est égal à 60 et $T_L = \frac{64}{\sqrt{108}} \cdot \left\{IFFT_{64}\left\{[0; S; 0; \; conj\left(flipud(S)\right)]\right\}\right\}^T$ avec *conj(.)* l'opérateur qui donne la conjugaison complexe et *flipud*(.) l'opérateur qui correspond à l'effet de symétrie haut-bas sur les éléments en colonne.

Un tel préambule est particulièrement avantageux pour un système de transmission optique par exemple de type IMDD (Intensity Modulated Direct Detected, c'est-à-dire modulation directe de laser et détection directe par photodiode)). En effet, la partie conj(flipud(S)) assure une symétrie Hermitienne qui permet de générer un signal réel. La modulation du laser nécessite en effet un signal réel et donc non complexe. Les échantillons à zéros à la fin du vecteur S qui correspond au bord du spectre ont pour effet de diminuer avantageusement l'effet « aliasing » du signal, c'est-à-dire les effets de recouvrement de spectre. Le facteur $\frac{\cdot 64}{\sqrt{108}}$ correspond à une normalisation de la puissance du préambule.

Selon un mode de réalisation particulier, le procédé de transmission est tel que la première séquence $T_L$ est obtenue par une transformée de Fourier inverse de taille L d'une séquence aléatoire S dont les éléments appartiennent à une constellation QPSK, la séquence aléatoire S est la suivante : [0; 1 + *j*; 1 + *j*; -1 + *j*; 0; 1 - *j*; 0; 0; 1 + *j*; 1 + *j*; -1 + *j*; 0; - 1 - *j*; - 1 + *j*; 0; 0; 0; - 1 + *j*; 0; 1 + *j*; - 1 - *j*; 0; - 1 - *j*; - 1 + *j*; 1 + *j*; 1 + *j*; 0; 0; 0; 0; 0; 0; 0; 0; 0; 0; 0; 0; 0; 1 - *j*; 1 + *j*; 0; 0; - 1 + *j*; 1 - *j*; - 1 + *j*; 1 - *j*; 0; - 1 + *j*; 0; 0; 0; 0; 0; 0; 1 + *j*; 0; 0; 1 - *j*; 1 + *j*], le nombre M est égal à 60 et

$$T_L = \frac{64}{\sqrt{52}} \cdot \left\{IFFT_{64}\{S\}\right\}^T.$$

Un tel préambule est particulièrement avantageux pour un système de transmission radio par exemple pour un système de diffusion en particulier de type DVB-T2 ou par exemple pour un système WiFi.

Dans un cas particulier la transformée de Fourier inverse (IDFT,IFFT) fait partie d'un modulateur OFDM et le préambule est alors constitué d'un ou plusieurs symboles OFDM.

**Liste des figures**

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :

- la figure 1, déjà commentée en relation avec l'art antérieur, est une illustration des valeurs prises par la métrique de synchronisation de la méthode de synchronisation de Schmidl et Cox,
- la figure 2a est un schéma de la structure particulière d'un préambule selon l'invention,
- la figure 2b est un schéma de la structure générique d'un préambule selon l'invention,
- la figure 3a est un schéma illustrant l'opérateur *fliplr* qui permet d'obtenir une version symétrique gauche-droite d'une séquence d'un préambule selon l'invention,
- la figure 3b est un schéma illustrant l'opérateur *flipud* qui permet d'obtenir une version symétrique haut-bas d'une séquence d'un préambule selon l'invention,
- la figure 4 est une représentation temporelle d'un exemple de préambule selon l'invention plus particulièrement adapté à un système de transmission optique par exemple de type IMDD,
- la figure 5 représente deux courbes, une première courbe correspondant à la synchronisation grossière qui utilise une première métrique et une seconde courbe correspondant à la synchronisation fine qui utilise en outre une deuxième métrique, selon l'invention,
- la figure 6 est un schéma du signal transmis selon l'invention,
- la figure 7 est une illustration du déroulement du procédé de synchronisation selon l'invention selon un mode de réalisation particulier,
- la figure 8 représente la probabilité que la vraie position de début de la trame soit dans la fenêtre de recherche en fonction de la taille de cette fenêtre, les deux courbes de probabilité représentées sont obtenues respectivement avec un procédé de synchronisation selon l'invention, courbe Inv, et avec la méthode de Schmidl et Cox, courbe SC,
- la figure 9 représente la moyenne de l'écart entre la vraie position de début de la trame et la position de synchronisation détectée en fonction du SNR, les deux courbes représentées sont obtenues respectivement avec un procédé de synchronisation selon l'invention, courbe Inv, et avec la méthode de Schmidl et Cox, courbe SC,
- la figure 10 représente la variance de l'écart entre la vraie position de début de la trame et la position de synchronisation détectée en fonction du SNR, les deux courbes représentées sont obtenues respectivement avec un procédé de synchronisation selon l'invention, courbe

Inv, et avec la méthode de Schmidl et Cox, courbe SC,

- la figure 11a est un schéma d'une structure simplifiée d'un récepteur mettant en oeuvre un procédé de synchronisation, selon l'invention,
- la figure 11b est un schéma d'une structure simplifiée d'un émetteur mettant un oeuvre un procédé de transmission, selon l'invention.

**Description de modes de réalisation de l'invention**

Le principe général de l'invention repose sur l'utilisation d'un préambule de structure particulière inséré en début de trame.

Cette structure est illustrée par les figures 2a et 2b. Le préambule comprend la répétition d'une première séquence de L échantillons. Le préambule comprend en outre la répétition d'une deuxième séquence de M échantillons. La deuxième séquence correspond à la version symétrique gauche-droite de la première séquence limitée à un nombre M d'échantillons inférieur au nombre L d'échantillons. Cette opération qui permet d'obtenir la version symétrique gauche-droite d'une séquence est notée *fliplr* et est illustrée par la figure 3a. Ainsi la version symétrique d'une séquence $s_1, s_2, ...,$ $s_{L-1}, s_L$ est la séquence $s_L, s_{L-1}, ..., s_2, s_1$. Cette opération est effectuée sur la première séquence tronquée de L-M échantillons. La troncature peut intervenir en début de séquence et/ou en fin de séquence. Selon une alternative, l'opération *fliplr* peut être effectuée sur la totalité de la première séquence et la séquence obtenue est alors tronquée de L-M échantillons. Lorsque la séquence est écrite sous la forme d'un vecteur colonne, la symétrie gauche-droite devient une symétrie haut-bas (up-down) illustrée par la figure 3b, l'opération correspondante qui permet d'obtenir la version symétrique haut-bas d'une séquence est notée *flipud*.

Le préambule s'écrit : $[T_L\ T_L\ U_M\ U_M]$, avec $U_M = fliplr(T)_M$ c'est-à-dire que $U_M$ est de longueur M. La longueur N du préambule est égale à 2L+2M.

Selon une forme miroir, le préambule a pour forme $[U_M\ U_M\ T_L\ T_L]$. La première séquence $U_M$ correspond à la version symétrique gauche-droite de la deuxième séquence $T_L$ limitée à un nombre M d'échantillons inférieur au nombre L d'échantillons, L'opération de symétrie est effectuée sur la deuxième séquence tronquée de L-M échantillons. La description qui suit est basée sur la forme $[T_L\ T_L\ U_M\ U_M]$ du préambule. Elle peut être adaptée à la forme miroir$[U_M\ U_M\ T_L\ T_L]$.

Selon un mode de réalisation, la première séquence $T_L$ est obtenue par une transformée de Fourier inverse (IFFT selon la terminologie anglosaxonne) de taille L d'une séquence aléatoire dont les éléments appartiennent à une constellation QPSK (Quadrature Phase Shift Keying). Les symboles QPSK sont avantageusement choisis pour que le PAPR (Peak to Average Power Ratio) du préambule soit faible.

Par exemple, la séquence aléatoire S suivante : S = [-1 + j; -1 + j; 1 + j; -1 - j; -1 - j; -1 + j; 1 + j; -1 + j; -1 + j; 1 - j; - 1 - j; -1 + j; 1 + j; - 1 - j; - 1 - j; - 1 - j; 1 + j; - 1 + j; 1 - j; - 1 - j; 1 + j; 1 - j; - 1 + j; - 1 - j; - 1 - j; 1 + j; - 1 - j; 0; 0 ; 0 ; 0] peut être utilisée pour générer la séquence $T_L$ à partir d'une IFFT de 64 points :

$$T_L = \frac{64}{\sqrt{108}} \cdot \left\{ IFFT_{64}\left[\left[0; S; 0;\ conj\left(flipud(S)\right)\right]\right] \right\}^T$$ avec *conj(.)* l'opérateur qui donne le conjugué complexe, expression dans laquelle S a la forme d'un vecteur colonne, dans laquelle la IFFT porte sur un vecteur colonne, dans laquelle l'opérateur $\{\ \}^T$ est l'opérateur de transposition matricielle. Avec M=60, le préambule a une longueur N=2L+2M=2x64+2x60=248. Ce préambule a un PAPR d'environ 5.4dB. Sa représentation temporelle est illustrée par la figure 4.

Selon un mode de réalisation, les symboles QPSK de la séquence sont utilisés pour transmettre des données ayant un intérêt particulier pour le récepteur, par exemple des données de signalisation et/ou des données de description de la trame.

Selon un autre exemple plus particulièrement adapté à une transmission radio, la séquence aléatoire S est la suivante :

$$S = [0; 1 + j; 1 + j; -1 + j; 0; 1 - j; 0; 0; 1 + j; 1 + j; -1 + j; 0; -1 - j; -1 + j; 0; 0; 0; -1$$
$$+ j; 0; 1 + j; -1 - j; 0; 0; -1 - j; -1 + j; 1 + j; 1$$
$$+ j; 0; 0; 0; 0; 0; 0; 0; 0; 0; 0; 0; 0; 0; 0; 1 - j; 1 + j; 0; 0; -1 + j; 1 - j; -1 + j; 1$$
$$- j; 0; -1 + j; 0; 0; 0; 0; 0; 0; 0; 1 + j; 0; 0; 1 - j; 1 + j]$$

La séquence $T_L$ est générée à partir d'une IFFT de 64 points : $T_L = \frac{64}{\sqrt{52}} \cdot \left\{ IFFT_{64}\{S\} \right\}^T$, expression dans laquelle S a la forme d'un vecteur colonne. Ce préambule a un PAPR d'environ 5.9dB.

Dans le contexte d'une synchronisation fréquentielle, la structure aléatoire des données, QPSK selon l'exemple, de la séquence S favorise une première synchronisation fréquentielle dite grossière.

Un émetteur selon l'invention émet un signal qui correspond à des échantillons successifs mis en trame tel que le début de la trame est délimité par un préambule de structure particulière précédemment décrite.

Un procédé de transmission selon l'invention transmet un signal qui correspond à des échantillons successifs mis en trame tel que le début de la trame est délimité par un préambule de structure particulière précédemment décrite.

Un récepteur selon l'invention de la trame calcule au moins une métrique qui exploite la structure particulière du préambule.

Selon un premier mode de réalisation de la synchronisation du récepteur, l'invention utilise une seule métrique, cette synchronisation est dite grossière. Cette première métrique mesure une corrélation entre séquences successives d'échantillons reçus délimités par une fenêtre glissante. Cette métrique présente un pic lorsque la fenêtre est calée sur le préambule puisque les séquences répétées sont fortement corrélées. Des distorsions sur le signal émis introduites par le canal ou le récepteur lui-même (bruit) peuvent modifier les séquences et introduire un biais sur la corrélation entre ces séquences.

La différence de longueur entre les séquences $T_L$ et $U_M$ assure que la métrique de synchronisation ne possède pas de pic secondaire.

Selon un deuxième mode de réalisation de la synchronisation du récepteur, l'invention utilise deux métriques, la métrique précédente et une deuxième métrique qui permet une synchronisation dite fine. La deuxième métrique mesure une corrélation sur une fenêtre glissante d'échantillons reçus en considérant quatre séquences successives d'échantillons sur la longueur de la fenêtre et en mesurant la corrélation respectivement entre la première séquence et la symétrie de la quatrième séquence et entre la deuxième séquence et la symétrie de la troisième séquence. Cette métrique a une forme proche de celle d'une impulsion (impulse-liked shape) localisée à un instant qui correspond à l'instant où la fenêtre est calée sur le préambule car l'expression de cette deuxième métrique exploite la symétrie de la structure particulière du préambule pour mesurer la corrélation entre les séquences. Des distorsions sur le signal reçu introduites par le canal ou le récepteur lui-même (bruit) peuvent modifier les séquences et introduire un biais sur la corrélation entre ces séquences.

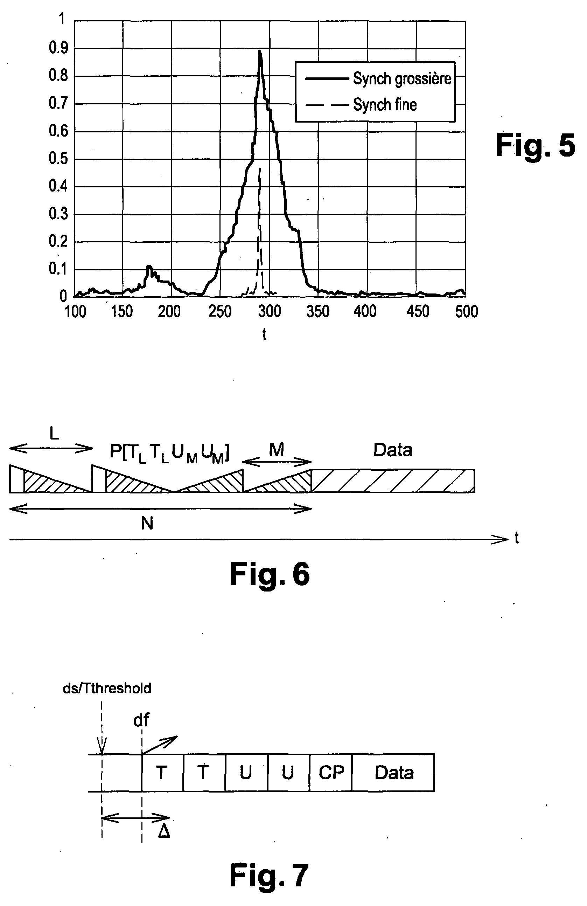

La figure 5 représente deux courbes, une première courbe en trait plein correspondant à la synchronisation grossière qui utilise la première métrique et une seconde courbe en traits pointillés correspondant à la synchronisation fine qui utilise en outre la deuxième métrique. Les courbes de corrélation correspondant à la synchronisation grossière et à la synchronisation fine présentent une forme moins étalée que la forme de la courbe obtenue avec la méthode de Schmidl et Cox illustrée par.la figure 1. Les figures 1 et 5 correspondent à un même système optique IMDD avec une longueur de fibre optique de 40km et un SNR de 15 dB. Le moindre étalement des courbes des métriques obtenues par l'invention assure donc des meilleures résultats de synchronisation qu'en utilisant la méthode de Schmidl et Cox.

Le procédé de synchronisation selon un mode de réalisation particulier est décrit de manière détaillée ci-après.

$R(k)$ est le signal reçu échantillonné, c'est-à-dire après l'amplificateur transimpédance dans le cas d'un signal optique. En général, le signal électrique en sortie de la photodiode est amplifié par un amplificateur transimpédance. Une illustration du signal émis est donnée à la figure 6. Le signal émis se compose du préambule P=$[T_L \; T_L \; U_M \; U_M]$ et de données Data. Le signal reçu correspond au signal émis avec en plus des éventuelles distorsions dues au canal et/ou au bruit Noise.

La métrique de synchronisation dite grossière calcule la somme des corrélations entre deux paires successives de séquences, elle a pour expression :

$$P_{pro1}(d) = \sum_{i=0}^{L-1} R(d+i).R(d+i+L)^* + \sum_{i=0}^{M-1} R(d+i+2L).R(d+i+2L+M)^* \qquad (1)$$

Après normalisation en puissance, la métrique a pour expression :

$$M_{pro1}(d) = \left| \frac{P_{pro1}(d)}{R_{pro1}(d)} \right|^2 \qquad (2)$$

avec :

$$R_{pro1}(d) \doteq 0.5 \sum_{i=0}^{N-1} |R(d+i)|^2 \qquad (3)$$

Cette première métrique donne une mesure de la corrélation entre séquences successives d'échantillons reçus. Sans l'impact du canal et du bruit sa valeur est maximale lorsque les séquences successives délimitées par la fenêtre glissante correspondent au préambule illustré par la figure 2. En effet, son expression est basée sur la corrélation qui existe au sein du préambule d'une part entre les L échantillons de la première séquence et les L échantillons de la répétition de la première séquence et d'autre part entre les M échantillons de la deuxième séquence et les M échantillons de la répétition de la deuxième séquence.

Le nombre des sommateurs $\sum$ dans la première métrique $P_{Pro1}$ est égal au nombre des séquences différentes répétées dans le préambule. Chaque sommateur peut être calculé de manière itérative. C'est-à-dire que la valeur du sommateur à l'instant $(d+l)$ peut être calculée à partir de celle à l'instant $(d)$, ce qui réduit la complexité du procédé de synchronisation et du récepteur. En effet, en prenant l'exemple du calcul du premier sommateur, à l'instant $(d+l)$, sa valeur est égale à:

$$Sommateur(d + 1) = \sum_{i=0}^{L-1} R(d + 1 + i). R(d + 1 + i + L)^{*}$$

En posant $i' = i + 1$, elle s'écrit :

$$\sum_{i'=1}^{L} R(d + i'). R(d + i' + L)^{*}$$

Qui est égale à :

$$\sum_{i'=0}^{L-1} R(d + i'). R(d + i' + L)^{*} + R(d + L)R(d + 2L)^{*} - R(d)R(d + L)^{*}$$

Qui est égale à :

$$Sommateur(d) + R(d + L)R(d + 2L)^{*} - R(d)R(d + L)^{*}$$

Ainsi, au lieu d'effectuer L-1 additions et L multiplications à chaque instant d pour calculer le premier sommateur de la métrique $P_{pro1}(d)$, il faut effectuer seulement deux additions et deux multiplications avec un calcul itératif ce qui réduit la complexité du récepteur.

Selon le mode de réalisation, le procédé de synchronisation peut compléter la mesure de corrélation entre séquences successives d'échantillons reçus au moyen d'une deuxième métrique.

L'expression de cette deuxième métrique est la suivante :

$$P_{pro2}(d) = \sum_{i=0}^{M-1} [R(d + i + L - M). R(d - i + N - 1)^{*} + R(d + i + 2L - M). R(d - i + 2L + M - 1)^{*}] \tag{4}$$

Après normalisation en puissance, la deuxième métrique a pour expression :

$$M_{pro2}(d) = \left| \frac{P_{pro2}(d)}{R_{pro2}(d)} \right|^{2} \tag{5}$$

avec :

$$R_{pro2}(d) = 0.5 \left\{ \sum_{i=0}^{M-1} [|R(d + i + L - M)|^{2} + |R(d + i + 2L - M)|^{2}] + \sum_{i=0}^{2M-1} |R(d + i + 2L)|^{2} \right\} \tag{6}$$

Cette deuxième métrique exploite la structure symétrique gauche-droite (ou haut-bas) du préambule qui existe sur un nombre M d'échantillons. Cette deuxième métrique est une mesure de corrélation dont l'expression est basée sur la corrélation qui existe au sein du préambule de structure particulière d'une part entre les M échantillons de la première séquence et les M échantillons de la répétition de la deuxième séquence et d'autre part entre les M échantillons de la répétition de la première séquence et les M échantillons de la deuxième séquence. De manière alternative, l'expression de cette deuxième métrique peut être la suivante :

$$P_{pro2}(d) = \sum_{i=0}^{M-1}[R(d+i+L-M).R(d-i+2L+M-1)^* + R(d+i+2L-M).R(d-i+N-1)^*] \qquad (7)$$

L'expression (7) mesure la corrélation entre les séquences 1 et 3 et entre les séquences 2 et 4 alors que l'expression (4) mesure la corrélation entre les séquences 1 et 4 et entre les séquences 2 et 3 en numérotant de 1 à 4 les 4 séquences du préambule.

Pour la forme miroir du préambule, la relation (1) devient :

$$P_{pro1}(d) = \sum_{i=0}^{M-1} R(d+i).R(d+i+M)^* + \sum_{i=0}^{L-1} R(d+i+2M).R(d+i+2M+L)^*$$

et la relation (3) devient :

$$R_{pro1}(d) = 0.5 \sum_{i=0}^{N-1}|R(d+i)|^2$$

et la relation (4) devient :

$$P_{pro2}(d) = \sum_{i=0}^{M-1}[R(d+i).R(d-i+N-1)^* + R(d+i+M).R(d-i+2M+L-1)^*]$$

et la relation (6) devient :

$$R_{pro2}(d) = 0.5 \{\sum_{i=0}^{2M-1}|R(d+i)|^2 + \sum_{i=0}^{M-1}[|R(d+i+M+L)|^2 + |R(d+i+2L+M)|^2]\}$$

et la relation (7) devient :

$$P_{pro2}(d) = \sum_{i=0}^{M-1}[R(d+i).R(d-i+2M+L-1)^* + R(d+i+M).R(d-i+N-1)^*]$$

Le procédé de synchronisation selon l'invention est simple, les calculs à effectuer sont soient des opérations d'addition, soient des opérations de multiplication sur un nombre limité d'échantillons sans manipulation ni prise en considération de probabilité de vraisemblance.

Le déroulement d'un procédé de synchronisation selon l'invention est décrit en référence à la figure 7.

Le procédé de synchronisation calcule la première métrique de synchronisation pour des échantillons reçus à des instants $d$ successifs. Selon un mode particulièrement avantageux, le procédé calcule la métrique sous sa forme normalisée.

La métrique est comparée avec un seuil déterminé $T_{threshold}$. La valeur de ce seuil est déterminée selon une probabilité de perte de paquets. Un paquet correspond généralement à une trame délimitée par un ou plusieurs préambules suivis de données (payload selon la terminologie anglosaxonne). Par exemple pour un SNR de 10dB, la valeur déterminée du seuil est de 0,5 pour une probabilité de perte de paquets de $10^{-5}$ (la perte concerne 1 paquet sur 100000 paquets envoyés).

Lors de la comparaison, le procédé de synchronisation détecte le dépassement du seuil $T_{threshold}$. Le dépassement correspond à un instant $ds$ dit instant de synchronisation grossière.

Selon un mode de réalisation particulier, le procédé de synchronisation affine l'instant $ds$ de synchronisation précédemment déterminé en utilisant la deuxième métrique de synchronisation.

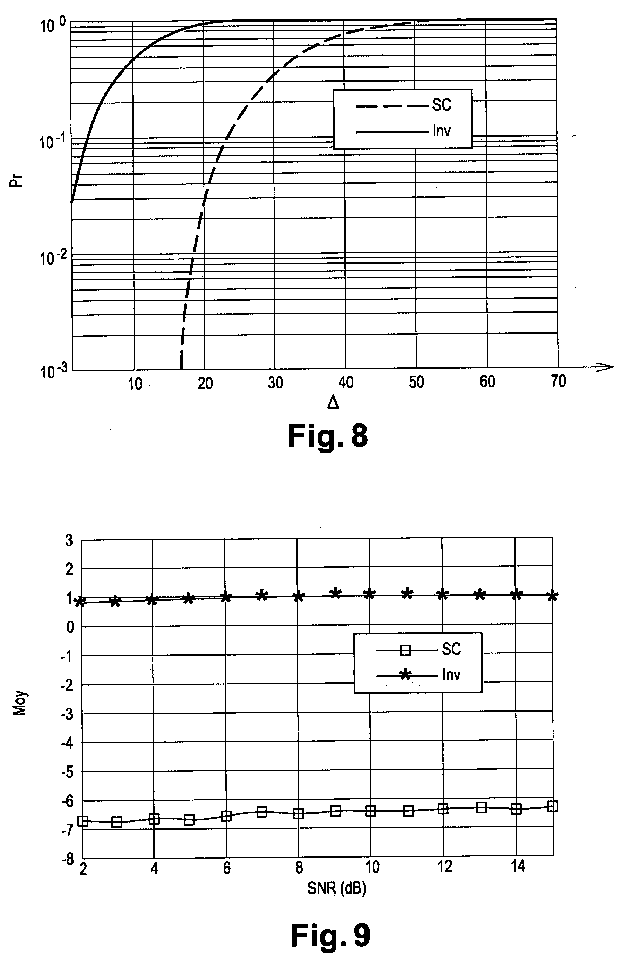

Selon ce mode, le procédé de synchronisation calcule la deuxième métrique de synchronisation à des instants *d* contenus dans une fenêtre de recherche W de taille Δ déterminée, commençant à l'instant *ds* : W= [*ds,..., ds*+Δ-1]. Le procédé détermine la taille Δ de la fenêtre W en fonction de la probabilité que le début de la trame se trouve dans la fenêtre. Plus la taille Δ est grande plus la probabilité se rapproche de 1 comme illustré par la figure 8. La valeur maximale de la deuxième métrique correspond au début estimé *df* du préambule, donc de la trame reçue.

Selon un mode particulier, le procédé de synchronisation calcule le produit de la première métrique et de la deuxième métrique à des instants d contenus dans la fenêtre W=[*ds,..., ds*+Δ-1]. La valeur maximale de ce produit correspond au début estimé *df* du préambule, donc de la trame reçu.

Le produit des deux métriques permet de resserrer la base du maximum de la mesure de corrélation obtenue par la première métrique, ce qui apparaît clairement sur la figure 5 en comparant les deux courbes, et donc de gagner en précision sur la détermination de l'instant de synchronisation. Cette précision est d'autant plus importante que la longueur M est proche de la longueur L. Les meilleurs résultats entre les différentes simulations effectuées interviennent quand la différence de longueur L-M est comprise entre 2% et 3% de la longueur N. Lors de simulations avec une longueur L de 248 échantillons, une différence de quelques échantillons entre M et L permet un pincement suffisant.

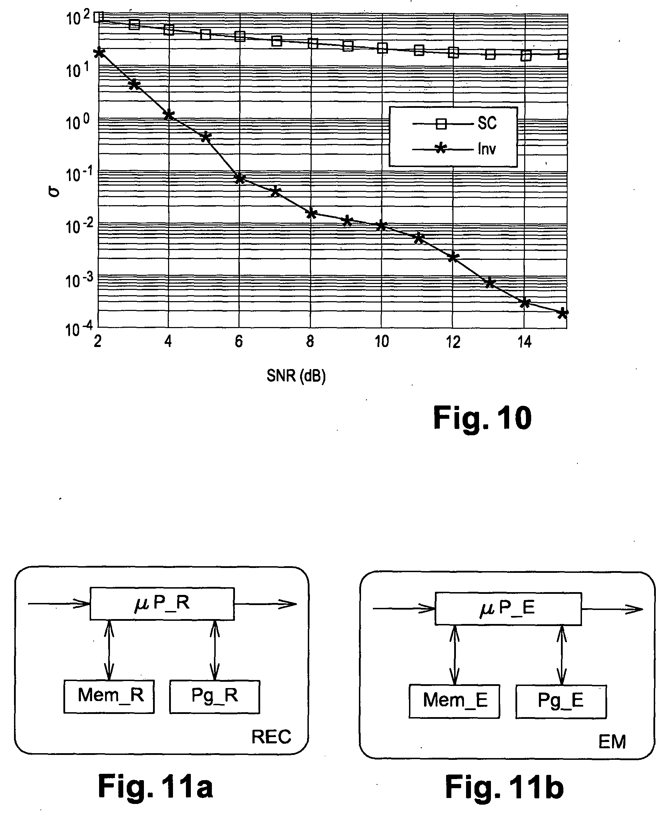

Cette précision peut se constater par la faible variance de l'écart entre la position détectée et la vraie position de début de la trame reçue. La figure 9 illustre la moyenne de l'écart entre la vraie position et la position de synchronisation détectée. La courbe Inv est obtenue à partir du procédé de synchronisation selon l'invention, et la courbe SC est obtenue à partir de la méthode Schmidl et Cox. La comparaison des moyennes de l'écart permet de constater que l'écart est plus faible avec le procédé selon l'invention qu'avec la méthode de Schmidl et Cox pour un même SNR. Une comparaison des variances entre la méthode de Schmidl et Cox et le procédé selon l'invention est illustrée par la figure 10. La comparaison permet de constater que la variance est plus faible pour le procédé de synchronisation selon l'invention pour un même SNR. La comparaison de la moyenne des écarts et de la variance permet de constater que la valeur détectée par le procédé selon l'invention est plus précise que celle obtenue avec la méthode de Schmidl et Cox. Les courbes 9 et 10 traduisent en outre la bonne robustesse du procédé selon l'invention en fonction du SNR. La probabilité de fausse détection du procédé selon l'invention est faible ce qui permet de l'utiliser pour une transmission de type paquet (burst selon la terminologie anglosaxonne) comme c'est le cas dans un système WiFi ainsi que pour une transmission continue comme c'est le cas dans un système de diffusion (broadcast selon la terminologie anglosaxonne).

Ce mode est particulièrement avantageux car l'amélioration de la synchronisation est obtenue en utilisant le même préambule que celui utilisé pour la synchronisation grossière.

Ainsi, un procédé selon l'invention peut apporter un avantage substantiel à un système WiFi. En effet, actuellement la synchronisation grossière d'un tel système est faite avec une méthode de Schmidl et Cox. Une synchronisation fine est ensuite effectuée mais sur d'autres préambules. La contrainte d'avoir deux préambules différents diminue l'efficacité spectrale de la transmission. L'utilisation d'un procédé de synchronisation selon l'invention dans un système WiFi permet d'améliorer l'efficacité spectrale de la transmission en n'utilisant qu'un seul et même préambule pour la synchronisation grossière et pour la synchronisation fine. Le même avantage existe avec un système radio.

La structure simplifiée d'un récepteur mettant en oeuvre un procédé de synchronisation selon les modes de réalisation décrits ci-dessus est décrite ci-après et illustrée par la figure 11a.

Un tel récepteur REC comprend une mémoire Mem_R comprenant une mémoire tampon, une unité de traitement μP_R équipée par exemple d'un microprocesseur et pilotée par un programme d'ordinateur Pg_R mettant en oeuvre le procédé de synchronisation selon l'invention.

A l'initialisation, les instructions de code du programme d'ordinateur Pg_R sont par exemple chargées dans une mémoire RAM avant d'être exécutées par le processeur de l'unité de traitement μP_R. L'unité de traitement μP_R reçoit en entrée des signaux transmis à travers un canal (par exemple dans une même bande ou par exemple dans plusieurs bandes) qui peut être dispersif (ou multi trajets par exemple pour un canal aérien). Le microprocesseur de l'unité de traitement μP_R met en oeuvre le procédé de synchronisation décrit précédemment, selon les instructions du programme d'ordinateur Pg_R. Pour cela, le récepteur comprend un calculateur pour calculer à des instants d successifs correspondants respectivement à des échantillons reçus la métrique de synchronisation grossière ainsi qu'un moyen de détection du dépassement d'un seuil déterminé par la métrique grossière, dépassement auquel correspond un instant *ds* de synchronisation dit grossier du récepteur. Le récepteur peut en outre comprendre un moyen de détermination d'une fenêtre W de recherche fine à partir de la valeur de synchronisation grossière *ds,* un calculateur pour calculer à des instants *d* successifs contenus dans la fenêtre W de recherche fine, la métrique de synchronisation fine, un moyen de détection du maximum de la métrique fine ou du dépassement d'un seuil déterminé par la métrique fine, maximum ou dépassement auquel correspond un instant de synchronisation fine. Ces moyens sont pilotés par le microprocesseur et font partie de l'unité de traitement μP_R.

La structure simplifiée d'un émetteur mettant un oeuvre un procédé de transmission selon les modes de réalisation décrits ci-dessus est décrite ci-après et illustrée par la figure 11b.

Un tel émetteur EM comprend une mémoire Mem_E comprenant une mémoire tampon, une unité de traitement μP_E, équipée par exemple d'un microprocesseur et pilotée par le programme d'ordinateur Pg_E mettant en oeuvre le procédé de transmission d'un signal selon l'invention.

A l'initialisation, les instructions de code du programme d'ordinateur Pg_E sont par exemple chargées dans une mémoire RAM avant d'être exécutées par le processeur de l'unité de traitement μP_E. L'unité de traitement μP_E reçoit en entrée des données par exemple modulées sous forme de symboles. Le microprocesseur de l'unité de traitement μP_E met en oeuvre le procédé de transmission décrit précédemment, selon les instructions du programme d'ordinateur Pg_E. Pour cela, l'émetteur comprend des moyens de détermination du préambule tel que le préambule P [$T_L$, $T_L$, $U_M$, $U_M$] comprend en outre, à la suite de la première séquence $T_L$ répétée, une deuxième séquence $U_M$ répétée de M symboles telle que cette deuxième séquence $U_M$ correspond à une version symétrique de la première séquence $T_L$ limitée à un nombre M de symboles inférieur au nombre L de symboles de la première séquence $T_L$. Ces moyens sont pilotés par le microprocesseur et font partie de l'unité de traitement μP_E.

[1] T. M. Schmidl and D. C. Cox, "Robust frequency and timing synchronization for OFDM," IEEE Transactions on Communications, vol. 45, no. 12, pp. 1613 -1621, décembre 1997.

## Revendications

1. Procédé de synchronisation d'un récepteur recevant un signal comprenant des échantillons successifs mis en trame dont le début est délimité par un préambule **caractérisé en ce qu'**il comprend :

   - un calcul à des instants d successifs correspondants respectivement à des échantillons reçus, d'une métrique de synchronisation grossière dont l'expression exploite la structure répétitive du préambule constitué d'au moins deux parties, une partie comprenant une première séquence répétée de L échantillons et une autre partie comprenant une deuxième séquence répétée de M échantillons, la deuxième séquence correspondant à une version symétrique de la première séquence limitée au nombre M d'échantillons inférieur au nombre L d'échantillons, cette métrique donnant une mesure de la somme des corrélations entre deux paires successives de séquences d'échantillons reçus sur une fenêtre glissante de taille égale à celle du préambule,
   - une détection du dépassement d'un seuil déterminé par la métrique grossière, dépassement auquel correspond un instant *ds* de synchronisation dit grossière.

2. Procédé de synchronisation d'un récepteur selon la revendication 1, dans lequel le calcul de la métrique de synchronisation grossière est effectué de manière itérative.

3. Procédé de synchronisation d'un récepteur selon l'une des revendications précédentes, dans lequel la métrique de synchronisation grossière a pour expression :

$$P_{pro1}(d) = \sum_{i=0}^{L-1} R(d+i).R(d+i+L)^{\bullet} + \sum_{i=0}^{M-1} R(d+i+2L).R(d+i+2L+M)^{\bullet}$$

avec $R(k)$ le signal reçu sous sa forme numériques, (.)* est un opérateur conjugué.

4. Procédé de synchronisation d'un récepteur selon l'une des revendications 1 à 3 comprenant en outre :

   - un calcul à des instants d successifs sur une zone (W) de recherche de taille Δ débutant à l'instant *ds* de synchronisation grossière d'une métrique de synchronisation fine dont l'expression exploite la structure symétrique du préambule, la métrique de synchronisation fine mesurant une corrélation entre séquences d'échantillons reçus dans une fenêtre glissante de taille égale à celle du préambule, la corrélation étant mesurée d'une part entre M échantillons de la première séquence et les M échantillons de la répétition de la deuxième séquence et d'autre part entre M échantillons de la répétition de la première séquence et les M échantillons de la deuxième séquence, le maximum de la métrique ou le dépassement d'un seuil détermine un instant *df* dit de synchronisation fine.

5. Procédé de synchronisation d'un récepteur selon l'une des revendications 1 à 3 comprenant en outre :

   - un calcul à des instants *d* successifs sur une zone de recherche de taille Δ commençant à l'instant *ds* de synchronisation grossière, du produit de la métrique de synchronisation grossière avec une métrique de synchronisation fine dont l'expression exploite la structure symétrique du préambule pour donner une mesure d'une corrélation entre séquences d'échantillons reçus sur une fenêtre glissante de taille égale à celle du préambule, la corrélation étant mesurée d'une part entre M échantillons de la première séquence et les M échantillons de la répétition de la deuxième séquence et d'autre part entre M échantillons de la répétition de la première séquence et les M échantillons dé la deuxième séquence, le maximum du produit des métriques ou le dépassement d'un seuil détermine un instant *df* dit de synchronisation fine.

6. Procédé de synchronisation d'un récepteur selon l'une des revendications 4 et 5, dans lequel la métrique de synchronisation fine a pour expression :

$$P_{pro2}(d) = \sum_{i=0}^{M-1}[R(d+i+L-M).R(d-i+N-1)^* + R(d+i+2L-M).R(d-i+2L+M-1)^*]$$ avec N=2L+2M la longueur du préambule, (.)* est un opérateur conjugué.

7. Récepteur d'un signal comprenant des échantillons successifs mis en trame dont le début est délimité par un préambule, **caractérisé en ce qu'**il comprend :

   - un calculateur pour calculer à des instants *d* successifs correspondants respectivement à des échantillons reçus, une métrique de synchronisation grossière dont l'expression exploite la structure répétitive du préambule constitué d'au moins deux parties, une partie comprenant une première séquence répétée de L échantillons et une autre partie comprenant une deuxième séquence répétée de M échantillons, la deuxième séquence correspondant à une version symétrique de la première séquence limitée au nombre M d'échantillons inférieur au nombre L d'échantillons, cette métrique donnant une mesure de la somme des corrélations entre deux paires successives de séquences d'échantillons reçus sur une fenêtre glissante de taille égale à celle du préambule,
   - un moyen de détection du dépassement d'un seuil déterminé par la métrique grossière, dépassement auquel correspond un instant *ds* de synchronisation dit grossière du récepteur.

8. Récepteur d'un signal selon la revendication précédente dans lequel le calculateur est adapté pour calculer de manière itérative la métrique de synchronisation grossière.

9. Récepteur d'un signal selon l'une des revendications 7 et 8 comprenant en outre :

   - un calculateur pour calculer à des instants d successifs sur une zone (W) de recherche de taille Δ débutant à l'instant *ds* de synchronisation grossière, une métrique de synchronisation fine dont l'expression exploite la structure symétrique du préambule, la métrique de synchronisation fine mesurant une corrélation entre séquences d'échantillons reçus sur une fenêtre glissante de taille égale à celle du préambule, la corrélation étant mesurée d'une part entre M échantillons de la première séquence et les M échantillons de la répétition de la deuxième séquence et d'autre part entre M échantillons de la répétition de la première séquence et les M échantillons de la deuxième séquence, le maximum de la métrique ou le dépassement d'un seuil déterminé détermine un instant *df* dit de synchronisation fine du récepteur.

10. Procédé de transmission d'un signal comprenant des échantillons successifs mis en trame dont le début est délimité par un préambule P **caractérisé en ce que** le procédé détermine le préambule P ([$T_L$, $T_L$, $U_M$, $U_M$], [$U_M$ $U_M$ $T_L$ $T_L$]) tel qu'il soit constitué d'au moins deux parties, une partie comprenant la répétition d'une première séquence $T_L$ de L échantillons et une autre partie comprenant une deuxième séquence $U_M$ répétée de M échantillons telle que cette deuxième séquence $U_M$ correspond à une version symétrique de la première séquence $T_L$ limitée au nombre M d'échantillons inférieur au nombre L d'échantillons de la première séquence $T_L$.

11. Procédé de transmission d'un signal selon la revendication précédente dans lequel la première séquence $T_L$ est obtenue par une transformée de Fourier inverse de taille L d'une séquence aléatoire S dont les éléments appartiennent à une constellation QPSK, la séquence aléatoire S est la suivante : [- 1 + j; - 1 + j; 1+ j; -1- j; -1- j; -1+ j; 1+ j; - 1 + j; -1+ j; 1- j; -1- j; -1+ j; 1 + j; - 1 - j; - 1 - j; - 1 - j; 1 + j; - 1 + j; 1 - j; - 1 - j; 1+ j; 1 - j; -1+ j; -1- j; -1- j; 1+ j; -1- j ; 0; 0; 0 ; 0], le nombre M est égal à 60 et $T_L = \frac{64}{\sqrt{108}} \cdot \left\{ IFFT_{64}\left\{ [0; S; 0; conj(flipud(S))] \right\} \right\}^T$ avec *conj(.)* l'opérateur qui donne la conjugaison complexe *et flipud(.)* l'opérateur qui correspond à l'effet de symétrie haut-bas sur les éléments en colonne.

12. Procédé de transmission d'un signal selon la revendication 10 dans lequel la première séquence $T_L$ est obtenue par une transformée de Fourier inverse de taille L d'une séquence aléatoire S dont les éléments appartiennent à une constellation QPSK, la séquence aléatoire S est la suivante : [0; 1 + *j*; 1 + *j*; -1 + *j*; 0; 1 - *j*; 0; 0; 1 + *j*; 1 + *j*; -1 +

*j*; 0; -1 - *j*; -1 + *j*; 0; 0; 0; -1 + *j*; 0; 1 + *j*; - 1 - *j*; 0; 0; - 1 - *j*; - 1 + *j*; 1 + *j*; 1 + *j*; 0; 0; 0; 0; 0; 0; 0; 0; 0; 0; 0; 0; 0; 0; 1 - *j*; 1 + *j*; 0; 0; -1 + *j*; 1 - *j*; -1 + *j*; 1 - *j*; 0; -1 + *j*; 0; 0; 0; 0; 0; 0; 0; 1 + *j*; 0; 0; 1 - *j*; 1 + *j*] , le nombre M est égal à 60 et

$$T_L = \frac{64}{\sqrt{52}} . \{IFFT_{64}\{S\}\}^T .$$

13. Signal transmis entre un émetteur et un récepteur comprenant des échantillons successifs mis en trame dont le début est délimité par un préambule P, **caractérisé en ce que** :

- le préambule P ([$T_L$, $T_L$, $U_M$, $U_M$], [$U_M$ $U_M$ $T_L$ $T_L$]) est constitué d'au moins deux parties, une partie comprenant une première séquence répétée de L échantillons et une autre partie comprenant une deuxième séquence $U_M$ répétée de M échantillons telle que cette deuxième séquence $U_M$ correspond à une version symétrique de la première séquence $T_L$ limitée à un nombre M d'échantillons inférieur au nombre L d'échantillons de la première séquence $T_L$.

14. Emetteur d'un signal comprenant des échantillons successifs mis en trame dont le début est délimité par un préambule P, **caractérisé en ce qu'**il comprend des moyens de détermination du préambule tel que :

- le préambule P ([$T_L$, $T_L$, $U_M$, $U_M$], [$U_M$ $U_M$ $T_L$ $T_L$]) soit constitué d'au moins deux parties, une partie comprenant la répétition d'une première séquence $T_L$ de L échantillons et une autre partie comprenant une deuxième séquence $U_M$ de M échantillons répétée telle que cette deuxième séquence $U_M$ correspond à une version symétrique de la première séquence $T_L$ limitée au nombre M d'échantillons inférieur au nombre L d'échantillons de la première séquence $T_L$.

**Patentansprüche**

1. Verfahren zur Synchronisation eines Empfängers, der ein Signal empfängt, das aufeinanderfolgende Abtastwerte umfasst, die in einen Rahmen gesetzt sind, dessen Anfang durch eine Präambel begrenzt wird, **dadurch gekennzeichnet, dass** dieses umfasst:

- eine Berechnung zu aufeinanderfolgenden Zeitpunkten d, die jeweils empfangenen Abtastwerten entsprechen, einer groben Synchronisationsmetrik, deren Ausdruck die repetitive Struktur der Präambel auswertet, die aus mindestens zwei Teilen besteht, wobei ein Teil eine erste wiederholte Sequenz von L Abtastwerten umfasst, und ein anderer Teil eine zweite wiederholte Sequenz von M Abtastwerten umfasst, wobei die zweite Sequenz einer symmetrischen Version der ersten Sequenz entspricht, begrenzt auf die Anzahl M von Abtastwerten kleiner als die Anzahl L von Abtastwerten, wobei diese Metrik ein Maß der Summe von Korrelationen zwischen zwei aufeinanderfolgenden Paaren von Abtastwertsequenzen ergibt, die in einem gleitenden Fenster mit einer Größe gleich jener der Präambel empfangen werden,
- eine Detektion der Überschreitung einer Schwelle, die durch die grobe Metrik bestimmt wird, wobei der Überschreitung ein Zeitpunkt ds der als grob bezeichneten Synchronisation entspricht.

2. Verfahren zur Synchronisation eines Empfängers nach Anspruch 1, wobei die Berechnung der groben Synchronisationsmetrik iterativ durchgeführt wird.

3. Verfahren zur Synchronisation eines Empfängers nach einem der vorhergehenden Ansprüche, wobei die grobe Synchronisationsmetrik den Ausdruck aufweist:

$$P_{pro1}(d) = \sum_{i=0}^{L-1} R(d+i).R(d+i+L)^* + \sum_{i=0}^{M-1} R(d+i+2L).R(d+i+2L+M)^*$$

wobei R(k) das empfangene Signal in seiner numerischen Form ist, und (.)* ein konjugierter Operator ist.

4. Verfahren zur Synchronisation eines Empfängers nach einem der Ansprüche 1 bis 3, ferner umfassend:

- eine Berechnung zu aufeinanderfolgenden Zeitpunkten d in einem Suchbereich (W) mit der Größe Δ, beginnend zum Zeitpunkt ds der groben Synchronisation, einer feinen Synchronisationsmetrik, deren Ausdruck die symmetrische Struktur der Präambel auswertet, wobei die feine Synchronisationsmetrik eine Korrelation zwischen Sequenzen von Abtastwerten misst, die in einem gleitenden Fenster mit einer Größe gleich jener der Präambel empfangen werden, wobei die Korrelation einerseits zwischen M Abtastwerten der ersten Sequenz und den M Abtastwerten der Wiederholung der zweiten Sequenz und andererseits zwischen M Abtastwerten der Wiederholung der ersten Sequenz und den M Abtastwerten der zweiten Sequenz gemessen wird, wobei das Maximum der Metrik oder die Überschreitung einer Schwelle einen Zeitpunkt df, als Zeitpunkt der feinen Synchronisation bezeichnet, bestimmt.

**5.** Verfahren zur Synchronisation eines Empfängers nach einem der Ansprüche 1 bis 3, ferner umfassend:

- eine Berechnung zu aufeinanderfolgenden Zeitpunkten d in einem Suchbereich mit der Größe $\Delta$, beginnend zum Zeitpunkt ds der groben Synchronisation, des Produkts der groben Synchronisationsmetrik mit einer feinen Synchronisationsmetrik, deren Ausdruck die symmetrische Struktur der Präambel auswertet, um ein Maß einer Korrelation zwischen Sequenzen von Abtastwerten zu ergeben, die in einem gleitenden Fenster mit einer Größe gleich jener der Präambel empfangen werden, wobei die Korrelation einerseits zwischen M Abtastwerten der ersten Sequenz und den M Abtastwerten der Wiederholung der zweiten Sequenz und andererseits zwischen M Abtastwerten der Wiederholung der ersten Sequenz und den M Abtastwerten der zweiten Sequenz gemessen wird, wobei das Maximum des Produkts der Metriken oder die Überschreitung einer Schwelle einen Zeitpunkt df, als Zeitpunkt der feinen Synchronisation bezeichnet, bestimmt.

**6.** Verfahren zur Synchronisation eines Empfängers nach einem der Ansprüche 4 und 5, wobei die feine Synchronisationsmetrik den Ausdruck aufweist:

$$P_{pro2}(d) = \sum_{i=0}^{M-1}[R(d + i + L - M).R(d - i + N - 1)^* + R(d + i + 2L - M).R(d - i + 2L + M - 1)^*]$$

wobei N=2L+2M die Länge der Präambel ist, und (.)* ein konjugierter Operator ist.

**7.** Empfänger eines Signals, das aufeinanderfolgende Abtastwerte umfasst, die in einen Rahmen gesetzt sind, dessen Beginn durch eine Präambel begrenzt wird, **dadurch gekennzeichnet, dass** dieser umfasst:

- einen Rechner zur Berechnung zu aufeinanderfolgenden Zeitpunkten d, die jeweils empfangenen Abtastwerten entsprechen, einer groben Synchronisationsmetrik, deren Ausdruck die repetitive Struktur der Präambel auswertet, die aus mindestens zwei Teilen besteht, wobei ein Teil eine erste wiederholte Sequenz von L Abtastwerten umfasst, und ein anderer Teil eine zweite wiederholte Sequenz von M Abtastwerten umfasst, wobei die zweite Sequenz einer symmetrischen Version der ersten Sequenz entspricht, begrenzt auf die Anzahl M von Abtastwerten kleiner als die Anzahl L von Abtastwerten, wobei diese Metrik ein Maß der Summe von Korrelationen zwischen zwei aufeinanderfolgenden Paaren von Abtastwertsequenzen ergibt, die in einem gleitenden Fenster mit einer Größe gleich jener der Präambel empfangen werden,
- ein Mittel zur Detektion der Überschreitung einer Schwelle, die durch die grobe Metrik bestimmt wird, wobei der Überschreitung ein Zeitpunkt ds der als grob bezeichneten Synchronisation des Empfängers entspricht.

**8.** Signalempfänger nach einem der vorhergehenden Ansprüche, wobei der Rechner ausgelegt ist, iterativ die grobe Synchronisationsmetrik zu berechnen.

**9.** Signalempfänger nach einem der Ansprüche 7 und 8, ferner umfassend:

- einen Rechner zur Berechnung zu aufeinanderfolgenden Zeitpunkten d in einem Suchbereich (W) mit der Größe $\Delta$, beginnend zum Zeitpunkt ds der groben Synchronisation, einer feinen Synchronisationsmetrik, deren Ausdruck die symmetrische Struktur der Präambel auswertet, wobei die feine Synchronisationsmetrik eine Korrelation zwischen Sequenzen von Abtastwerten misst, die in einem gleitenden Fenster mit einer Größe gleich jener der Präambel empfangen werden, wobei die Korrelation einerseits zwischen M Abtastwerten der ersten Sequenz und den M Abtastwerten der Wiederholung der zweiten Sequenz und andererseits zwischen M Abtastwerten der Wiederholung der ersten Sequenz und den M Abtastwerten der zweiten Sequenz gemessen wird, wobei das Maximum der Metrik oder die Überschreitung einer Schwelle einen Zeitpunkt df, als Zeitpunkt der feinen Synchronisation bezeichnet, des Empfängers bestimmt.

**10.** Verfahren zur Übertragung eines Signals, das aufeinanderfolgende Abtastwerte umfasst, die in einen Rahmen gesetzt sind, dessen Beginn durch eine Präambel P begrenzt wird, **dadurch gekennzeichnet, dass** das Verfahren die Präambel P ($[T_L, T_L, UM, U_M]$, [UM UM $T_L$ $T_L$]) bestimmt, so dass sie aus mindestens zwei Teilen besteht, wobei ein Teil die Wiederholung einer ersten Sequenz $T_L$ von L Abtastwerten umfasst, und ein anderer Teil eine zweite wiederholte Sequenz UM von M Abtastwerten umfasst, so dass diese zweite Sequenz UM einer symmetrischen Version der ersten Sequenz $T_L$ entspricht, begrenzt auf die Anzahl M von Abtastwerten kleiner als die Anzahl L von Abtastwerten der ersten Sequenz $T_L$.

**11.** Verfahren zur Übertragung eines Signals nach dem vorhergehenden Anspruch,
wobei die erste Sequenz $T_L$ durch eine inverse Fourier-Transformation mit der Größe L einer aleatorischen Sequenz S erhalten wird, deren Elemente zu einer Konstellation QPSK gehören, wobei die aleatorische Sequenz S die folgende ist: [-1+j; -1+j; 1+j; -1- j; -1- j; -1+j; 1+j; -1+j; -1+j; 1-j; -1-j; -1+j; 1+ j; -1-j; -1-j; - 1-j; 1+j; -1+j; 1-j ; -1-j; 1+j; 1-j; -1+j; -1-j; -1-j; 1+j; -1-j; 0; 0; 0; 0], wobei die Zahl M gleich 60 ist, und

$$T_L = \frac{64}{\sqrt{108}} \cdot \left\{ IFFT_{64} \{ [0; S; 0; \; conj(flipud(S))] \} \right\}^T$$

wobei conj(.) der Operator ist, der die komplexe Konjugation ergibt, und flipud(.) der Operator ist, der dem Effekt der Symmetrie oben/unten der Spaltenelemente entspricht.

**12.** Verfahren zur Übertragung eines Signals nach Anspruch 10, wobei die erste Sequenz $T_L$ durch eine inverse Fourier-Transformation mit der Größe L einer aleatorischen Sequenz S erhalten wird, deren Elemente zu einer Konstellation QPSK gehören, wobei die aleatorische Sequenz S die folgende ist: [0;1 + $j$; 1 + $j$; -1 + $j$; 0; 1 - $j$; 0; 0; 1 + $j$; 1 + $j$; -1 + $j$; 0; - 1 - $j$; - 1 + $j$; 0; 0; 0; - 1 + $j$; 0; 1 +$j$; -1 -$j$; 0; 0; -1 -$j$; -1 + $j$; 1 + $j$; 1 + $j$; 0; 0; 0; 0; 0; 0; 0; 0; 0; 0; 0; 0; 0; 0; 1 -$j$; 1 + $j$; 0; 0; - 1 + $j$; 1 -$j$; - 1 + $j$; 1 -$j$; 0; - 1 + $j$; 0; 0; 0; 0; 0; 0; 1 + $j$; 0; 0; 1 - $j$; 1 + $j$] wobei die Zahl M gleich 60 ist, und

$$T_L = \frac{64}{\sqrt{52}} \cdot \left\{ IFFT_{64}\{S\} \right\}^T.$$

**13.** Signal, welches zwischen einem Sender und einem Empfänger übertragen wird, umfassend aufeinanderfolgende Abtastwerte, die in einen Rahmen gesetzt sind, dessen Beginn durch eine Präambel P begrenzt wird,
**dadurch gekennzeichnet, dass**:

- die Präambel P($[T_L, T_L, UM, U_M]$, [UM UM $T_L$ $T_L$]) aus mindestens zwei Teilen besteht, wobei ein Teil eine erste wiederholte Sequenz $T_L$ von L Abtastwerten umfasst, und ein anderer Teil eine zweite wiederholte Sequenz UM von M Abtastwerten umfasst, so dass diese zweite Sequenz UM einer symmetrischen Version der ersten Sequenz $T_L$ entspricht, begrenzt auf eine Anzahl M von Abtastwerten kleiner als die Anzahl L von Abtastwerten der ersten Sequenz $T_L$.

**14.** Sender eines Signals, das aufeinanderfolgende Abtastwerte umfasst, die in einen Rahmen gesetzt sind, dessen Beginn durch eine Präambel P begrenzt wird,
**dadurch gekennzeichnet, dass** dieser Mittel zur Bestimmung der Präambel umfasst, so dass:

- die Präambel P($[T_L, T_L, UM, U_M]$, [UM UM $T_L$ $T_L$]) aus mindestens zwei Teilen besteht, wobei ein Teil die Wiederholung einer ersten Sequenz $T_L$ von L Abtastwerten umfasst, und ein anderer Teil eine zweite wiederholte Sequenz UM von M Abtastwerten umfasst, so dass diese zweite Sequenz UM einer symmetrischen Version der ersten Sequenz $T_L$ entspricht, begrenzt auf die Anzahl M von Abtastwerten kleiner als die Anzahl L von Abtastwerten der ersten Sequenz $T_L$.

**Claims**

**1.** Method for synchronizing a receiver receiving a signal comprising successive samples placed in a frame whose start is delimited by a preamble **characterized in that** it comprises:

- a calculation at successive instants d corresponding respectively to samples received, of a coarse synchronization metric whose expression utilizes the repetitive structure of the preamble consisting of at least two parts, a part comprising a first repeated sequence of L samples and another part comprising a second repeated sequence of M samples, the second sequence corresponding to a symmetric version of the first sequence limited to the smaller number M of samples than the number L of samples, this metric giving a measure of the sum of the correlations between two successive pairs of sequences of samples received over a sliding window of size equal to that of the preamble,

- a detection of the overstepping of a threshold determined by the coarse metric, to which overstepping there corresponds an instant *ds* of so-called coarse synchronization.

2. Method for synchronizing a receiver according to Claim 1, in which the calculation of the coarse synchronization metric is performed in an iterative manner.

3. Method for synchronizing a receiver according to one of the preceding claims, in which the expression for the coarse synchronization metric is:

$$P_{pro1}(d) = \sum_{i=0}^{L-1} R(d+i).R(d+i+L)^* + \sum_{i=0}^{M-1} R(d+i+2L).R(d+i+2L+M)^*$$

with R(k) the signal received in its numerical form, (.)* is a conjugate operator.

4. Method for synchronizing a receiver according to one of Claims 1 to 3 furthermore comprising:

- a calculation at successive instants d over a search zone (W) of size $\Delta$ starting at the instant *ds* of coarse synchronization of a fine synchronization metric whose expression utilizes the symmetric structure of the preamble, the fine synchronization metric measuring a correlation between sequences of samples received in a sliding window of size equal to that of the preamble, the correlation being measured on the one hand between M samples of the first sequence and the M samples of the repetition of the second sequence and on the other hand between M samples of the repetition of the first sequence and the M samples of the second sequence, the maximum of the metric or the overstepping of a threshold determines an instant df of so-called fine synchronization.

5. Method for synchronizing a receiver according to one of Claims 1 to 3 furthermore comprising:

- a calculation at successive instants d over a search zone of size $\Delta$ beginning at the instant *ds* of coarse synchronization, of the product of the coarse synchronization metric with a fine synchronization metric whose expression utilizes the symmetric structure of the preamble to give a measure of a correlation between sequences of samples received over a sliding window of size equal to that of the preamble, the correlation being measured on the one hand between M samples of the first sequence and the M samples of the repetition of the second sequence and on the other hand between M samples of the repetition of the first sequence and the M samples of the second sequence, the maximum of the product of the metrics or the overstepping of a threshold determines an instant df of so-called fine synchronization.

6. Method for synchronizing a receiver according to one of Claims 4 and 5, in which the expression for the fine synchronization metric is:

$$P_{pro2}(d) = \sum_{i=0}^{M-1}[R(d+i+L-M).R(d-i+N-1)^* + R(d+i+2L-M).R(d-i+ \quad 2L+M-1)^*]$$ with N=2L+2M the length of the preamble, (.)* is a conjugate operator.

7. Receiver of a signal comprising successive samples placed in a frame whose start is delimited by a preamble, **characterized in that** it comprises:

- a calculator for calculating at successive instants d corresponding respectively to samples received, a coarse synchronization metric whose expression utilizes the repetitive structure of the preamble consisting of at least two parts, a part comprising a first repeated sequence of L samples and another part comprising a second repeated sequence of M samples, the second sequence corresponding to a symmetric version of the first sequence limited to the smaller number M of samples than the number L of samples, this metric giving a measure of the sum of the correlations between two successive pairs of sequences of samples received over a sliding window of size equal to that of the preamble,

- a means for detecting the overstepping of a threshold determined by the coarse metric, to which overstepping there corresponds an instant *ds* of so-called coarse synchronization of the receiver.

8. Receiver of a signal according to the preceding claim, in which the calculator is adapted for calculating the coarse synchronization metric in an iterative manner.

9. Receiver of a signal according to one of Claims 7 and 8 furthermore comprising:

- a calculator for calculating at successive instants d over a search zone (W) of size $\Delta$ starting at the instant *ds* of coarse synchronization, a fine synchronization metric whose expression utilizes the symmetric structure of the preamble, the fine synchronization metric measuring a correlation between sequences of samples received over a sliding window of size equal to that of the preamble, the correlation being measured on the one hand between M samples of the first sequence and the M samples of the repetition of the second sequence and on the other hand between M samples of the repetition of the first sequence and the M samples of the second sequence, the maximum of the metric or the overstepping of a determined threshold determines an instant *df* of so-called fine synchronization of the receiver.

10. Method for transmitting a signal comprising successive samples placed in a frame whose start is delimited by a preamble P **characterized in that** the method determines the preamble P ($[T_L, T_L, U_M, U_M], [U_M\ U_M\ T_L\ T_L]$) such that it consists of at least two parts, a part comprising the repetition of a first sequence $T_L$ of L samples and another part comprising a second repeated sequence $U_M$ of M samples such that this second sequence $U_M$ corresponds to a symmetric version of the first sequence $T_L$ limited to the smaller number M of samples than the number L of samples of the first sequence $T_L$.

11. Method for transmitting a signal according to the preceding claim in which the first sequence $T_L$ is obtained by an inverse Fourier transform of size L of a random sequence S whose elements belong to a QPSK constellation, the random sequence S is the following: [-1 + j; -1 + j; 1 + j; -1 - j; -1 - j; -1 + j; 1 + j; -1 + j; -1 + j; 1 - j; -1 - j; -1 + j; 1 + j; - 1 - j; -1 - j; -1 - j; 1 + j; -1 + j; 1 - j; -1 - j; 1 + j; 1 - j; -1 + j; -1 - j; -1 - j; 1 + j; -1 - j; 0; 0; 0; 0], the number M is equal to 60 and $$T_L = \frac{64}{\sqrt{108}} \cdot \left\{ IFFT_{64}\left\{ [0;\, S;\, 0;\, conj\left(flipud(S)\right)]\right\}\right\}^T$$

with conj(.) the operator which gives the complex conjugation and *flipud(.)* the operator which corresponds to the effect of high-low symmetry on the elements column-wise.

12. Method for transmitting a signal according to Claim 10, in which the first sequence $T_L$ is obtained by an inverse Fourier transform of size L of a random sequence S whose elements belong to a QPSK constellation, the random sequence S is the following: [0; 1 + j; 1 + j; -1 + j; 0; 1 - j; 0; 0; 1 + j; 1 + j; -1 + j; 0; - 1 - j; -1 + j; 0; 0; 0; -1 + j; 0; 1 + j; - 1 - j; 0; 0; - 1 - j; -1 + j; 1 + j; 1 + j; 0; 0; 0; 0; 0; 0; 0; 0; 0; 0; 0; 0; 0; 0; 0; 1 - j; 1 + j; 0; 0; -1 + j; 1 - j; -1 + j; 1 - j; 0; -1 + j; 0; 0; 0; 0; 0; 0; 0; 1 + j; 0; 0; 1 - j; 1 + j], the number M is equal to 60 and $$T_L = \frac{64}{\sqrt{52}} \cdot \left\{ IFFT_{64}\{S\}\right\}^T .$$

13. Signal transmitted between a sender and a receiver comprising successive samples placed in a frame whose start is delimited by a preamble P, **characterized in that**:

- the preamble P ($[T_L, T_L, U_M, U_M], [U_M\ U_M\ T_L\ T_L]$) consists of at least two parts, a part comprising a first repeated sequence of L samples and another part comprising a second repeated sequence $U_M$ of M samples such that this second sequence $U_M$ corresponds to a symmetric version of the first sequence $T_L$ limited to a smaller number M of samples than the number L of samples of the first sequence $T_L$.

14. Sender of a signal comprising successive samples placed in a frame whose start is delimited by a preamble P, **characterized in that** it comprises means for determining the preamble such that:

- the preamble P ($[T_L, T_L, U_M, U_M], [U_M\ U_M\ T_L\ T_L]$) consists of at least two parts, a part comprising the repetition of a first sequence $T_L$ of L samples and another part comprising a second sequence $U_M$ of M samples which is repeated such that this second sequence $U_M$ corresponds to a symmetric version of the first sequence $T_L$ limited to the smaller number M of samples than the number L of samples of the first sequence $T_L$.

Fig. 1

Fig. 2a

Fig. 2b

Fig. 3a

Fig. 3b

Fig. 4

**Fig. 5**

**Fig. 6**

**Fig. 7**

**Fig. 8**

**Fig. 9**

**Fig. 10**

**Fig. 11a**

**Fig. 11b**

**EP 2 898 644 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030072256 A

**Littérature non-brevet citée dans la description**

- **T. M. SCHMIDL ; D. C. COX.** Robust frequency and timing synchronization for OFDM. *IEEE Transactions on Communications,* Décembre 1997, vol. 45 (12), 1613-1621